# EUROPÄISCHE PATENTANMELDUNG

(11) **EP 4 793 059 A1**
(43) Veröffentlichungstag der Anmeldung: **19.08.2026**
(21) Anmeldenummer: 26151695.9
(22) Anmeldetag: 13.01.2026
(51) Int. Cl.: B44C 5/04, A47B 96/20, B32B 3/04, B32B 38/00, B32B 38/18

(54) **VERFAHREN ZUR HERSTELLUNG EINES PLATTENFÖRMIGEN PRODUKTS MIT ZUMINDEST ZWEI ZUMINDEST TEILWEISE BESCHICHTETEN FLÄCHENABSCHNITTEN, WERKSTÜCKBEARBEITUNGSVORRICHTUNG FÜR DAS VERFAHREN UND MIT DEM VERFAHREN HERGESTELLTES PLATTENFÖRMIGES PRODUKT**

(30) Priorität: 12.02.2025 DE 102025105127
(71) Anmelder: Hymmen GmbH Maschinen- und Anlagenbau, 33613 Bielefeld (DE)
(72) Erfinder: PANKOKE, René, 33739 Bielefeld (DE)
(74) Vertreter: Prüfer & Partner mbB Patentanwälte · Rechtsanwälte

(57) **Zusammenfassung**

Die Erfindung betrifft ein Verfahren zur Herstellung eines plattenförmigen Produkts mit zumindest zwei zumindest teilweise beschichteten Flächenabschnitten, umfassend die Schritte:
Schritt S1: Bereitstellen eines plattenförmigen Werkstücks (1, 1', 1", 1‴) mit einer Werkstückoberseite (1a) und einer der Werkstückoberseite gegenüberliegenden Werkstückunterseite (1b), wobei sich zumindest eine Werkstückkantenfläche (1c, 1d, 1e, 1f) zwischen der Werkstückoberseite (1a) und der Werkstückunterseite (1b) erstreckt,
Schritt S2: Zumindest teilweises Beschichten der Werkstückoberseite (1a) in Bereichen von Flächenabschnitten, die die zumindest zwei zumindest teilweise beschichteten Flächenabschnitte ausbilden, und
Schritt S4: Einbringen oder Bereitstellen zumindest einer Nut (3) in die bzw. der Werkstückunterseite (1b) zur Ausbildung zumindest einer Knickkante (3a) auf der Werkstückoberseite (1a), um die der Flächenabschnitt der Werkstückoberseite (1a) als ein zumindest teilweise beschichteter Flächenabschnitt abknickbar ist,
wobei die Nut (3) in Schritt S4 derart in das plattenförmige Werkstück (1, 1', 1 ", 1‴) eingebracht bzw. bereitgestellt wird, dass die zumindest eine Werkstückkantenfläche (1c, 1d, 1e, 1f) nach einem Abknicken des zumindest einen teilweise beschichteten Flächenabschnitts der Werkstückoberseite (1a), der an die zumindest eine Werkstückkantenfläche (1c, 1d, 1e, 1f) angrenzt, in einer Ebene mit der Werkstückunterseite (1b) liegt.

## Beschreibung

Die vorliegende Erfindung betrifft ein Verfahren zur Herstellung eines plattenförmigen Produkts mit zumindest zwei zumindest teilweise beschichteten Flächenabschnitten, eine Werkstückbearbeitungsvorrichtung, die zur Ausführung des Verfahrens verwendet werden kann, sowie ein plattenförmiges Produkt, dessen Herstellung zumindest das Verfahren beinhaltet.

Die Erfindung betrifft dabei insbesondere die Herstellung von plattenförmigen Produkten, bei denen eine Beschichtung nicht nur in einer Ebene aufzubringen ist, sondern die zumindest zwei zueinander abgewinkelte beschichtete Flächenabschnitte aufweisen sollen. Zu solchen Produkten zählen u.a. plattenförmige Produkte, die nicht nur eine beschichtete Plattenoberfläche, sondern auch zumindest eine beschichtete Produktkantenfläche aufweisen sollen, wie beispielsweise Küchenarbeitsplatten, Schreibtischplatten, Möbelfronten, Möbelinnenplatten, Türen, Paneele für Fußböden oder als Haus- oder Fassadenverkleidungen und dergleichen. Ausgangsmaterial für solche Produkte kann eine Kunststoffplatte, eine Holzwerkstoffplatte, wie eine Spanplatte, MDF-Platte, HDF-Platte oder eine OSB-Platte, oder eine ähnliche Platte sein.

Eine Möglichkeit zur Herstellung solcher plattenförmigen Produkte besteht darin, die zu beschichtenden Flächenabschnitte in zumindest zwei aufeinanderfolgenden Schritten separat mit einer Beschichtung zu versehen. Beispielsweise wird bei der Herstellung von dekorativen Holzwerkstoffplatten, die in der Küchenmöbelindustrie als Fronten für Küchenschränke verwendet werden, Spanplatten, MDF-Platten oder HDF-Platten mit einer dekorativen Beschichtung auf der Plattenoberfläche durch eine aufkaschierte Papierfolie, durch eine bedruckte Möbelfolie aus Kunststoff, wie ABS (Acrylnitril-Butadien-Styrol-Copolymer), PP (Polypropylen) oder dergleichen, oder durch eine sogenannte Kurztaktpressenbeschichtung mit einer Melaminoberfläche versehen. In einem anschließenden Arbeitsschritt werden dann die offenen Kantenflächen mit einem sogenannten Kunststoffanleimer, der auch als Kantenband bekannt ist, beklebt. Ein solches Kantenband besteht üblicherweise aus einem in etwa 0,5 mm bis 2 mm dicken Kunststoffmaterial, wie ABS oder PP, und kann entweder einfarbig oder auch in einer Holz-, Stein-, Marmor- oder Betonoptik oder mit einem sonstigem Dekor bedruckt sein. Wie eingangs bereits angeführt, erfordert ein solches Verfahren mehrere separate Beschichtungsschritte sowie das Vorhalten unterschiedlicher Beschichtungsmaterialen. Außerdem ist es bei dem sogenannten Anfahren von Kantenbandmaterial kaum möglich, das identische Dekor zwischen der Oberfläche der Platte und dem Kantenmaterial im gleichen Farbton und im passenden Design im industriellen Maßstab herzustellen. Dies führt dazu, dass eine dekorativ beschichtete Platte aus einer Roh-MDF-Platte, welche möglichst naturgetreu eine Vollholzplatte nachbilden soll, gerade an den Kanten unecht aussieht. Zudem ergibt sich ein hoher Kostenaufwand für die Bereitstellung möglichst genau passender Kantenbandmaterialen für eine Vielzahl von Oberflächendekoren bei kleinen Losgrößen.

Alternativ zu einer Folienbeschichtung sind für plattenförmige Produkte Druckverfahren bekannt, bei denen, wie beispielsweise in der EP 1 892 107 A1 beschrieben, zunächst eine Produktoberfläche und anschließend die Kantenflächen bedruckt werden. Hierfür ist es erforderlich, das für das Produkt vorgesehene Werkstück, wie in der EP 1 892 107 A1, und/oder die Druckeinrichtung für den jeweils zu bedruckenden Flächenabschnitt unterschiedlich relativ zueinander auszurichten. So ist beispielsweise das zur Herstellung des Produkts vorgesehene Werkstück nach dem Bedrucken der Plattenoberfläche um 90° zu kippen, damit die Bedruckung der Kantenfläche erfolgen kann. Alternativ kann die Kante ohne ein Kippen der Plattenoberfläche mit senkrecht gestellten Druckköpfen bedruckt werden, was aber ebenfalls wieder zu eine Reihe von technischen Schwierigkeiten und nicht zufriedenstellend gelösten Problemen führt. Ungeachtet des damit verbundenen Aufwands zur Handhabung des Werkstücks und/oder der Druckeinrichtung birgt ein solches Verfahren aber immer auch das Risiko des Überdruckens der Kantenflächen, so dass der dekorative Eindruck der Plattenoberfläche gestört sein kann. Das heißt, die Bedruckung der Kante führt dazu, dass auf der Plattenoberfläche ebenfalls Druckfarbe oder Drucktinte aufgebracht wird und das Dekor der Plattenoberfläche damit beschädigt. Auch ergeben sich hier hohe Anforderungen an die genaue Positionierung, um Musterübergänge von der Plattenoberfläche auf die Kantenflächen in ausreichender Qualität gewährleisten zu können.

Eine vergleichbare Problematik ergibt sich auch bei der Alternative des Bedruckens einer Plattenoberfläche, wobei das diesbezügliche Werkstück vorher mit einem dekorativen Kantenbandmaterial, das beispielsweise separat gedruckt wurde und insbesondere farbig ist, beklebt wurde. Da die mit dem nachträglichen Bedrucken verbundene Herausforderung, die exakten Maße der zu bedruckenden Plattenoberfläche in einem Toleranzbereich von < 1 mm zu treffen und genau zu bedrucken kaum mit einfachen Mitteln zu lösen ist, können sich unbedruckte Streifen am Rand der zu bedruckenden Plattenoberfläche ergeben oder das Dekor der Kantenfläche durch ein Überdrucken beschädigt werden.

Es ist Aufgabe der hier vorliegenden Erfindung, die Herstellung eines plattenförmigen Produkts mit zumindest zwei zumindest teilweise zu beschichtenden Flächenabschnitten, die nicht in einer gemeinsamen Ebene liegen, zu verbessern und den industriellen Herstellungsprozess zu vereinfachen.

Die Aufgabe wird durch die Gegenstände der unabhängigen Ansprüche gelöst. Vorteilhafte Weiterbildungen sind Gegenstand der Unteransprüche.

Erfindungsgemäß umfasst ein Verfahren zur Herstellung eines plattenförmigen Produkts mit zumindest zwei zumindest teilweise beschichteten Flächenabschnitten die Schritte:
Schritt S1: Bereitstellen eines plattenförmigen Werkstücks mit einer Werkstückoberseite und einer der Werkstückoberseite gegenüberliegenden Werkstückunterseite, wobei sich zumindest eine Werkstückkantenfläche zwischen der Werkstückoberseite und der Werkstückunterseite erstreckt und der Dicke des plattenförmigen Werkstücks an der durch die zumindest eine Werkstückkantenfläche gebildeten Außenkante entspricht,
Schritt S2: Zumindest teilweises Beschichten der Werkstückoberseite in Bereichen von Flächenabschnitten, die die zumindest zwei zumindest teilweise beschichteten Flächenabschnitte ausbilden, wobei einer der zumindest teilweise zu beschichtenden Flächenabschnitte der Werkstückoberseite an die zumindest eine Werkstückkantenfläche angrenzt, und
Schritt S4: Einbringen oder Bereitstellen zumindest einer Nut in die bzw. der Werkstückunterseite zur Ausbildung zumindest einer Knickkante auf der Werkstückoberseite, um die der Flächenabschnitt der Werkstückoberseite als ein zumindest teilweise beschichteter Flächenabschnitt gegenüber dem an die Knickkante angrenzenden anderen Flächenabschnitt der Werkstückoberseite als weiterer zumindest teilweise beschichteter Flächenabschnitt abknickbar ist,
wobei die Nut in Schritt S4 derart in das plattenförmige Werkstück eingebracht bzw. bereitgestellt wird, dass die zumindest eine Werkstückkantenfläche nach einem Abknicken des zumindest einen teilweise beschichteten Flächenabschnitts der Werkstückoberseite, der an die zumindest eine Werkstückkantenfläche angrenzt, in einer Ebene mit der Werkstückunterseite liegt.

Die vorstehende numerische Angabe der Verfahrensschritte stellt keine zwangsläufige Reihenfolge der Verfahrensschritte dar, sofern die Reihenfolge sich nicht aus dem Wortlaut an sich ergibt. So kann der Schritt S4 nicht nur vor dem Schritt S2, sondern auch vor dem Schritt S1 ausgeführt werden. In diesem Zusammenhang betrifft ein Einbringen der zumindest einen Nut in Schritt S4 die Bearbeitung des plattenförmigen Werkstücks mittels eines entsprechenden Bearbeitungsverfahrens, während das Bereitstellen der zumindest einen Nut dem Herstellungsprozess des plattenförmigen Werkstücks geschuldet ist. Beispielsweise kann das plattenförmige Werkstück eine Pressspanplatte sein, bei deren Herstellung die zumindest eine Nut direkt mit eingepresst, also nicht nachträglich eingebracht wird. Wie zu Schritt S4 zudem bereits durch die zumindest teilweise Ausführung vor, nach oder während des Schritts S2 angegeben wurde, muss der Schritt S4 auch nicht zwangsläufig vor, nach oder innerhalb der Ausführung des Schritts S2 abgeschlossen sein. So kann Schritt S4 beispielweise vor dem Schritt S2 begonnen und während des Schritts S2 fortgesetzt werden.

Das plattenförmige Werkstück kann eine Kunststoffplatte oder eine Holzwerkstoffplatte, wie eine Spanplatte, MDF-Platte, HDF-Platte oder eine OSB-Platte, oder eine ähnliche Platte sein. Als Platte wird hier ein formstabiles Werkstück mit einer Werkstückgeometrie verstanden, die eine flächige Werkstückoberseite und eine gegenüberliegende flächige Werkstückunterseite aufweist, wobei die Werkstückoberseite über zumindest eine Werkstückkantenfläche mit der Werkstückunterseite verbunden ist. Die Erstreckung der zumindest einen Werkstückkantenfläche zwischen der Werkstückoberseite und der Werkstückunterseite ist geringer als zumindest eine flächige Ausdehnung der Werkstückoberseite bzw. der Werkstückunterseite. Der Abstand zwischen der Werkstückoberseite und der Werkstückunterseite kann konstant oder auch zumindest teilweise abweichend sein. Ein Abweichung von einem konstanten Abstand kann toleranzbedingt oder auch bewusst vorgesehen sein. Beispielsweise kann die Werkstückoberseite und/oder die Werkstückunterseite profiliert sein und/oder in Bezug auf die jeweils andere Werkstückseite angewinkelt verlaufen. Der Abstand zwischen der Werkstückoberseite und der Werkstückunterseite beträgt insbesondere zumindest an einer Stelle mindestens 2 mm, bevorzugt mindestens 4 mm, besonders bevorzugt mindestens 10 mm.

Für ein aus dem plattenförmigen Werkstück herzustellendes plattenförmiges Produkt mit zumindest zwei zumindest teilweise beschichteten Flächenabschnitten, die nicht in einer gemeinsamen Ebene liegen bzw. eine Produktoberseite und zumindest eine daran angrenzenden Produktkantenfläche betreffen, wird gemäß dem vorstehenden Verfahren durch ein zumindest teilweises Beschichten der Werkstückoberseite in Schritt S2 in Bereichen von Flächenabschnitten, die die zumindest zwei zumindest teilweise beschichteten Flächenabschnitte ausbilden, zunächst die Beschichtung aufgebracht. Durch die durch die zumindest eine Nut gebildete Knickkante kann dann zumindest ein beschichteter Flächenabschnitt relativ zu einem anderen beschichteten Flächenabschnitt abgeknickt werden, so dass die zwei zumindest teilweise beschichteten Flächenabschnitte des Produkts, die nicht in einer Ebene liegen, vorgesehen werden können. Wird beispielsweise die Werkstückoberseite in Schritt S2 beschichtet und die Nut in die Werkstückunterseite eingebracht, verläuft die zumindest eine Knickkante durch die für die zumindest teilweise beschichteten Flächenabschnitte des Produkts zu beschichtenden Flächenabschnitte des Werkstücks. Über die Knickkante kann die Beschichtung nahtlos von einem der zumindest teilweise beschichteten Flächenabschnitte des Produkts in den anderen zumindest teilweise beschichteten Flächenabschnitt des Produkts übergehen. Dies ist insbesondere bei einer Beschichtung in Form eines Dekors, das für die Nachbildung einer Echtholzoberfläche, Steinoberfläche oder anderer ineinander übergehender Musterungen gedacht ist, vorteilhaft.

Die Knickkante zum Abknicken des einen den einen zumindest teilweise beschichteten Flächenabschnitt relativ zum anderen den anderen zumindest teilweise beschichteten Flächenabschnitt wird durch den Nutgrund der zumindest einen Nut ausgebildet. Das Abknicken ist eine Biegung um die Knickkante, die entsprechend auch als Biegekante bezeichnet werden kann. Die Knickkante muss nicht über den Nutgrund eindeutig entlang einer einzigen Linie definiert sein, sondern kann auch über einen durch den Nutgrund definierten Bereich ausgebildet werden. Beispielsweise kann die zumindest eine Nut U-förmig sein, so dass der Nutgrund mehrere Möglichkeiten zur Ausbildung der Knickkante bietet. Mit dieser U-förmigen Variante können z.B. unterschiedliche Kantenradien am fertigen Produkt erzeugt werden. Zur Ausbildung der Knickkante kann die zumindest eine Nut aber insbesondere V-förmig ausgebildet sein. Der Nutgrund kann dabei mit einer Spitze oder auch mit einem Radius ausgebildet werden, um die optischen Eigenschaften der Knickkante als klare Kante oder auch als abgerundete Fase darstellen zu können. Die zumindest eine Nut ist nicht auf eine V-förmige Ausgestaltung beschränkt und kann auch andere Formen aufweisen, um eine gewünschte Ausgestaltung des Knickbereichs bzw. der Knickkante für das Produkt zu erzielen. Die durch die zumindest eine Nut ausgebildete Knickkante kann eine materialabhängige und biegeradiusabhängige Maximaldicke aufweisen, um bei einem Abknickvorgang einem Reißen oder Bruch im Bereich der Knickkante vorzubeugen. Die Maximaldicke trägt somit den gemäß dem Biegeradius auftretenden Zugspannungen auf der Außenseite der Biegung und der Materialfestigkeit Rechnung. Ebenso kann eine materialabhängige und bauteilabhängige Mindestdicke vorgesehen sein, um auch hier andernfalls aufgrund der auftretenden Kraftübertragungen einem Bruch oder Reißen im Bereich der Knickkante unterbinden zu können. Bevorzugte Radien der Knickkante liegen beispielsweise bei einem Radius von R kleiner oder gleich 5 mm, bevorzugt kleiner oder gleich 2 mm, besonders bevorzugt kleiner oder gleich 1 mm.

In einer Ausgestaltung des Verfahrens umfasst das zumindest teilweise Beschichten zumindest ein teilweises Beschichten mit einem Dekor, einer Farbe und/oder einer Funktionsbeschichtung.

Bei der Farbe kann es sich um eine einheitliche Farbe oder die Ausbildung von Farbbereichen handelt. Als Funktionsbeschichtung können Beschichtungen eingesetzt werden, die beispielsweise die Oberflächeneigenschaften, wie eine Kratzfestigkeit, Härte, Temperaturbeständigkeit und/oder chemische Eigenschaften oder dergleichen beeinflussen, eingesetzt werden.

In einer Ausgestaltung des Verfahrens erfolgt das zumindest teilweise Beschichten gemäß Schritt S2 vor oder nach dem Einbringen der zumindest einen Nut in die Werkstückunterseite gemäß Schritt S4 und das Werkstück wird zwischen der Ausführung der Schritte S2 und S4 in einem Schritt S3 gewendet wird, so dass Schritt S2 und Schritt S4 von der gleichen Seite aus ausgeführt werden.

Alternativ oder ergänzend kann die zumindest eine Nut in Schritt S4 auch von der zur digitalen Bedruckung in Schritt S2 gegenüberliegenden Seite in die Werkstückunterseite eingebracht werden.

In einer Ausgestaltung des Verfahrens wird die Nut in Schritt S4 spanend in die Werkstückunterseite eingebracht, insbesondere gefräst.

Durch das spanende Bearbeiten der Werkstückoberseite und/oder Werkstückunterseite zum Einbringen der zumindest einen Nut in Schritt 4, insbesondere über einen Fräsvorgang, kann die Ausgestaltung und/oder Positionierung der zumindest einen Nut flexibel gesteuert werden.

In einer Ausgestaltung des Verfahrens wird das Werkstück vor oder in Schritt S1 in einem 3D-Druckverfahren hergestellt. Dabei werden die notwendigen Nuten bereits im Druckverfahren eingebracht.

In einer Ausgestaltung des Verfahrens wird nach den Schritten S2 und S4 in einem Schritt S6 zumindest einer der an der Knickkante angrenzenden zumindest teilweise beschichteten Flächenabschnitte entlang der Knickkante abgeknickt, um das plattenförmige Produkt auszubilden.

Demnach umfasst das Verfahren nicht nur die zur Herstellung des plattenförmigen Produkts erforderlichen Schritte in Bezug auf das Werkstück, sondern auch den Schritt S6 des Abknickens des zumindest einen der an der Knickkante angrenzenden zumindest teilweise beschichteten Flächenabschnitte entlang der Knickkante in die abschließende Produktform oder in eine zur weiteren Bearbeitung des Produkts vorgesehene Position.

In einer Ausgestaltung des Verfahrens wird der in Schritt S6 abzuknickende zumindest teilweise beschichtete Flächenabschnitt um 30° bis 150°, bevorzugt um 60° bis 120°, besonders bevorzugt um 90° aus der Ebene der Werkstückoberseite oder der Werkstückunterseite abgeknickt.

Entsprechend wird die zumindest eine Nut derart bereitgestellt oder in die Werkstückoberseite oder die Werkstückunterseite eingebracht, dass der eine der zumindest zwei zumindest teilweise beschichteten Flächenabschnitte nach der Ausführung des Schritts S6 mit dem anderen der zumindest zwei zumindest teilweise beschichteten Flächenabschnitte einen Winkel von 30° bis 150°, bevorzugt 60° bis 120°, insbesondere 90° ausbildet. Dazu kann insbesondere die zumindest eine Nut als V-förmige Nut als gleichschenkliges Dreieck ausgebildet sein, wobei die gleichlangen Seiten des gleichschenkligen Dreiecks ausgehend vom Nutgrund einen jeweiligen Winkel einschließen. Bei einem plattenförmigen Werkstück mit konstantem Abstand zwischen der Werkstückoberseite und der Werkstückunterseite kann ein Winkel von 90° zwischen den zumindest teilweise beschichteten Flächenabschnitten beispielsweise durch eine V-förmige Nut als gleichschenkliges Dreieck gebildet werden, wobei die gleichlangen Schenkel ausgehend vom Nutgrund einen Winkel von 90° symmetrisch zu einer Senkrechten zur Werkstückoberseite bzw. Werkstückunterseite ausbilden.

In einer Ausgestaltung des Verfahrens wird nach den Schritten S2 und S4 und vor Schritt 6 in einem Schritt S5 zumindest abschnittsweise ein Haftmittel auf den Nutflanken aufgebracht wird, um die zumindest teilweise beschichteten Flächenabschnitte nach Ausführung des Schritts S6 in der abgeknickten Position zu fixieren.

Das Haftmittel kann ebenfalls aufgedruckt sein. Alternativ oder ergänzend kann das Haftmittel aufgesprüht, aufgestrichen oder anderweitig aufgetragen werden. Als Haftmittel können Klebstoffe in flüssiger oder pastöser Form oder auch als Haft- bzw. Klebstreifen eingesetzt werden. Der Haftmittelauftrag kann an den Nutflanken einseitig oder auch zweiseitig erfolgen. Je nach verwendetem Haftmittel und Umgebungsbedingungen kann zwischen Schritt S5 und Schritt S6 eine vorgegebene Mindestzeitspanne vorgesehen sein, um beispielsweise Lösungsmittel vor dem Zusammenfügen der Nutflanken ablüften zu lassen. Ebenso kann je nach verwendetem Haftmittel und Umgebungsbedingungen zwischen Schritt S5 und Schritt S6 eine vorgegebene Maximalzeitspanne vorgesehen sein, um eine Degradation des Haftmittels zu vermeiden. In Schritt S6 können die Nutflanken mit einer haftmittelabhängigen Kraft aneinandergepresst werden.

Das Haftmittel kann Füllstoffe enthalten oder selbst als Füllstoff dienen, um Toleranzen auszugleichen. Alternative oder ergänzend können auch Füllstoffe zusätzlich zum Haftmittel eingesetzt werden.

Alternativ oder ergänzend zum Einsatz von Haftmitteln können auch andere Verbindungsarten eingesetzt werden, wobei die Verbindung der zumindest teilweise beschichteten Flächenabschnitte nach Schritt S6 erfolgen kann. Beispielsweise können Nagelstifte oder Schrauben eingesetzt werden, die die abgeknickten dekorativen Flächenabschnitte in ihrer vorgegebenen Position fixieren. Auch hierbei kann der Einsatz von Füllstoffen vorgesehen werden.

In einer Ausgestaltung des Verfahrens umfasst das zumindest teilweise Beschichten der Werkstückoberseite in Schritt S2 ein zumindest teilweises digitales Bedrucken.

Die digitale Bedruckung in Schritt S2 bezieht sich in diesem Kontext auf ein Druckverfahren, mit dem die Bedruckung ortsaufgelöst gemäß einer digitalen Druckvorlage ausgeführt wird. Damit kann die Beschichtung, insbesondere ein Dekor, und der Bedruckungsort in einfacher Weise angepasst werden, so dass auch die Herstellung von Produkten in kleinen Serien wirtschaftlich umsetzbar ist. Bei einem Beispiel, bei dem die Nut in die Werkstückoberseite eingebracht wird, um die auf der Werkstückoberseite bedruckten Flächenabschnitte entlang der auf der Werkstückunterseite gebildeten Knickkante aufeinander zu zu klappen, kann die digitale Bedruckung auch die Berücksichtigung der Nut für einen möglichst nahtlosen Übergang des Dekors ermöglichen.

Alternativ oder ergänzend können auch andere Druckverfahren und/oder Beschichtungsverfahren, wie beispielsweise ein Aufkaschieren einer Papierfolie oder ein Beschichten mit einer bedruckten Folie aus Kunststoff, zur zumindest teilweisen Beschichtung in Schritt S2 eingesetzt werden.

In einer Ausgestaltung des Verfahrens wird durch das zumindest teilweise digitale Bedrucken in Schritt S2 ein Dekordruck und/oder ein Strukturdruck erzeugt wird.

Ein Dekordruck beinhaltet optische Dekorelemente, wie Muster, Bilder, Bildnachahmungen und/oder farbige Vorgaben. Der Strukturdruck betrifft den Auftrag dreidimensionaler Strukturen, die haptische und/oder optische Effekte erzeugen. Insbesondere kann durch den Strukturdruck eine Oberfläche mit Vertiefungen und oder erhabenen Stellen verstanden werden, wobei die Vertiefungen und/oder erhabenen Stellen vom Rest der Oberfläche zwischen 0 mm bis 2 mm höher oder tiefer liegen, bevorzugt zwischen 10 µm und 500 µm.

Der Strukturdruck kann vor und/oder nach dem Dekordruck erfolgen. Zudem kann der Strukturdruck auch den Dekordruck beinhalten, indem beispielsweise dem Druckmaterial des Strukturdrucks Farbpigmente beigefügt werden.

Alternativ oder ergänzend können auch durch andere Beschichtungsverfahren in Schritt S2 ein Dekordruck und/oder ein Strukturdruck erzeugt werden.

In einer Ausgestaltung des Verfahrens werden durch das zumindest teilweise digitale Bedrucken in Schritt S2 der Dekordruck und der Strukturdruck synchron erzeugt.

Demnach kann der Strukturdruck synchron bzw. möglichst passgenau auf den Dekordruck aufgedruckt werden oder umgekehrt. Der Begriff "synchron" bzw. "passgenau" bezieht sich auf die möglichst positionsgenaue Übereinstimmung zwischen einem optischen Dekorelement und einer dem optischen Dekorelement zugeordneten Struktur. Beispielsweise sind Erhöhungen und/oder Vertiefungen durch den Strukturdruck bei einem synchronen Strukturdruck so angeordnet, dass sie das darunterliegende Bild als Dekorelement durch den Dekordruck mindestens an Teilstellen nachempfinden und die räumlichen Abweichungen in der Bildebene zwischen der Struktur und dem darunterliegenden Bild an den nachempfundenen Stellen 0 mm bis maximal 4 mm, bevorzugt 0 mm bis 1 mm, besonders bevorzugt 0 mm bis 0,5 mm betragen. Zum Beispiel wird eine in einem Bild dargestellte oder auch fotorealistische Holzstruktur erzeugt, bei der die Vertiefungen und/oder erhabenen Stellen den im Bild dargestellten Holzmaserungen folgen und beispielsweise an Stellen von runden Astlöchern ebenfalls runde Erhöhungen oder Vertiefungen in der Struktur dargestellt sind.

In einer Ausgestaltung des Verfahrens wird in Schritt S2 auf einen Flächenabschnitt, der den einen der zumindest zwei zumindest teilweise digital bedruckten Flächenabschnitte bildet, ein anderes Dekor gedruckt als auf einen anderen Flächenabschnitt, der den anderen der zumindest zwei zumindest teilweise digital bedruckten Flächenabschnitte bildet.

Somit können Produkte mit unterschiedlichen Dekorvorgaben für die dekorativen Flächenabschnitte hergestellt werden. Die digitale Bedruckung ermöglicht hierbei eine flexible Gestaltung unterschiedlichster Produkte und Dekorzusammenstellungen.

Alternativ oder ergänzend können die unterschiedlichen Dekore auch durch andere Beschichtungsverfahren in Schritt S2 erzeugt werden.

In einer Ausgestaltung des Verfahrens kann das in Schritt S2 aufgedruckte Bild eine Holznachbildung darstellen, die nach dem Abknicken in Schritt S6 sehr naturgetreu aussieht, vor dem Abknicken aber entlang der Knickkante in einer Ebene nicht zusammengehörende Bildelemente aufweist. Dies ist beispielsweise der Fall, wenn das Produkt nach der Herstellung ein zugesägtes Vollholzbrett imitieren soll, welches auf der Oberfläche eine Maserung hat, und auf der zumindest einen Werkstückkantenfläche einen Teil der Jahresringe eines aus dem vollen Baumstamm gesägten Holzstückes aufweist. Dies kann mit oder ohne die passende gedruckte Struktur erfolgen.

In einer Ausgestaltung des Verfahrens weist das Werkstück zumindest zwei aneinandergrenzende Werkstückkantenflächen auf, wobei in Schritt S4 für jede der zumindest zwei aneinandergrenzenden Werkstückkantenflächen die zumindest eine Nut sowie eine Aussparung im Angrenzungsbereich der zumindest zwei aneinandergrenzenden Werkstückkantenflächen, die ein Abknicken der zumindest zwei aneinandergrenzenden Werkstückkantenflächen ermöglicht, eingebracht oder bereitgestellt wird.

Zum Beispiel werden für die Herstellung eines plattenförmigen Produkts, bei dem zumindest zwei aneinandergrenzende Werkstückkantenflächen nach Schritt S6 Teile der Werkstückunterseite ausbilden, jeweils V-förmige Nuten, die einen Winkel von 90° für eine rechtwinkelige Produktkante aufweisen, parallel zu den jeweiligen Werkstückkantenflächen in die Werkstückunterseite eingebracht. Die Aussparung im Angrenzungsbereich wird dabei einerseits durch die Überlagerung der Nuten erzeugt, die entsprechende Kantenaussparungsabschnitte ausbilden. Zudem wird im Angrenzungsbereich für die Aussparung der Materialanteil, der ausgehend von der Überlagerung der Nutgründe den Eckbereich des Werkstücks bildet, als Freischnitt entfernt. Dieser Materialanteil entspricht in dem vorliegenden Beispiel einer rechtwinkeligen Ecke.

In einer Ausgestaltung des Verfahrens ist das plattenförmige Werkstück als Viereck mit vier aneinandergrenzenden Werkstückkantenflächen ausgebildet und für jede der vier aneinandergrenzenden Werkstückkantenflächen wird die zumindest eine Nut sowie eine Aussparung in den Angrenzungsbereichen der jeweils aneinandergrenzenden Werkstückkantenflächen, die ein Abknicken der jeweils aneinandergrenzenden Werkstückkantenflächen ermöglicht, eingebracht oder bereitgestellt.

Somit kann aus dem plattenförmigen Werkstück ein zumindest teilweise beschichtetes Produkt mit einer zumindest teilweise beschichteten Produktoberseite und vier zumindest teilweise beschichteten Produktseitenflächen hergestellt werden.

In einem weiteren Aspekt betrifft die vorliegende Erfindung eine Werkstückbearbeitungsvorrichtung mit zumindest einer Beschichtungseinheit und mit einer Steuerungsvorrichtung, die dazu konfiguriert ist, die Beschichtungseinheit zumindest zur Ausführung des Schritts S2 des vorstehend beschriebenen Verfahrens anzusteuern.

Die Beschichtungseinheit kann eine Druckeinheit sein, die beispielsweise als digitale Druckeinheit, die anhand von Druckdaten, die von der Steuerungsvorrichtung übermittelt werden oder in der Druckeinheit gespeichert sind, die digitale Bedruckung ausführt. Die Beschichtungseinheit kann auch mehrere Druckeinheiten aufweisen, um zum Beispiel über unterschiedliche Druckeinheiten den Dekordruck und den Strukturdruck separat ausführen zu können.

Alternativ oder ergänzend kann die Beschichtungseinheit auch eine Einheit zum Aufbringen einer bedruckten Folie, wie einer Papierfolie oder Kunststofffolie, sein oder eine Sprüh- oder Lackiereinheit sein, über die ein flüssiges oder viskoses Beschichtungsmedium, wie eine Grundierung oder Farbe, auf die Werkstückoberseite aufgebracht wird.

Zusätzlich zu der zumindest einen eigentlichen Einheit zur Beschichtung kann die Beschichtungseinheit auch weitere Einheiten aufweisen, die die Beschichtung unterstützende Verfahrensschritte, die auf eine Werkstückoberflächenvorbereitung und/oder, insbesondere bei der Anwendung noch fluiden Beschichtungsmedien, auf eine Trocknung und/oder Aushärtung des Beschichtungsmediums gerichtet sind.

Beispielsweise kann die Beschichtungseinheit eine der zumindest einen Druckeinheit als exemplarische Einheit der Beschichtungseinheit zur Beschichtung in einer Werkstücktransportrichtung nachgelagerte Aushärtungseinheit und/oder Trocknungseinheit aufweisen, um den Dekordruck und/oder den Strukturdruck auszuhärten und/oder zu trocknen. Auch kann die Aushärtungseinheit und/oder Trocknungseinheit zwischen zwei Druckeinheiten angeordnet sein. Zum Beispiel kann die Beschichtungseinheit in der Werkstücktransportrichtung zuerst eine Druckeinheit für den Dekordruck aufweisen, gefolgt von einer Trocknungseinheit zur zumindest teilweisen Trocknung des Dekordrucks, der sich wiederum eine Druckeinheit für den Strukturdruck anschließt, wobei der Strukturdruck über eine nachgelagerte UV-Aushärtungseinheit zumindest teilweise ausgehärtet wird.

In einer Ausgestaltung ist die Steuerungsvorrichtung dazu konfiguriert ist, das zuvor beschriebene zumindest teilweise digitale Bedrucken der die zumindest zwei zumindest teilweise zu beschichtenden Flächenabschnitte bildenden Flächenabschnitte in ihrem jeweiligen Dekor und/oder ihrer jeweiligen Flächen anzupassen.

Die Steuerungsvorrichtung kann somit beispielweise die zumindest eine Druckeinheit zur Zusammensetzung verschiedener gespeicherter Dekore für einen Dekordruck und/oder Strukturdruck für unterschiedliche Flächenabschnitte ansteuern oder die Druckdaten für die Ansteuerung der zumindest einen Druckeinheit anpassen. Je nach Dekorvorgaben, Produktgeometrien und Werkstückabmessungen sind somit flexible Produktgestaltungen möglich. Dies betrifft auch insbesondere die passgenaue bzw. synchrone Ausbildung des Dekordrucks und des Strukturdrucks, die durch digitale Anpassungen entsprechend aufeinander abgestimmt werden können.

In einer Ausgestaltung weist die Werkstückbearbeitungsvorrichtung zudem eine der Beschichtungseinheit vorgelagerte oder nachgelagerte Bearbeitungseinheit auf, wobei die Steuerungsvorrichtung oder eine weitere Steuerungsvorrichtung dazu konfiguriert ist, die Bearbeitungseinheit zur Ausführung des Schritts S4 anzusteuern.

Die Bearbeitungseinheit ist beispielsweise eine Fräseinheit, zum Einbringen der zumindest einen Nut in die Werkstückoberseite oder die Werkstückunterseite. Die Steuerungsvorrichtung kann die Bearbeitungseinheit zumindest in Bezug auf eine Position der zumindest einen Nut und/oder der Nutgeometrie ansteuern.

Die Werkstückbearbeitungsvorrichtung kann auch eine zwischen der Beschichtungseinheit und der Bearbeitungseinheit angeordnete Werkstückwendeeinheit aufweisen, so dass das Werkstück von einer Werkstückoberseite auf eine Werkstückunterseite gewendet werden kann. Somit kann bei einer Einbringung der zumindest einen Nut in die Werkstückunterseite der Schritt S4 und der Schritt S2 von der gleichen Seite der Werkstückbearbeitungsvorrichtung aus durchgeführt werden.

Die Steuerungsvorrichtung, die auch die Beschichtungseinheit ansteuert, oder die weitere Steuerungsvorrichtung kann die Bearbeitungsstation insbesondere derart ansteuern, dass die einzubringende zumindest eine Nut derart positioniert wird, dass der nach außen weisende beschichtete Flächenabschnitt der Werkstückoberseite nach dem Abknicken der Dicke des Werkstücks entspricht, so dass die vorherige Werkstückkantenfläche bündig an der Werkstückunterseite anliegt, um einen Teil der Werkstückunterseite bzw. die Produktunterseite des plattenförmigen Produkts mit auszubilden. Der entsprechenden Steuerungsvorrichtung können dazu die dafür erforderlichen Werkstückgeometriedaten übermittelt werden. Beispielsweise kann die Bearbeitungsstation in einem einem Bearbeitungswerkzeug in der Werkstücktransportrichtung vorgelagerten Bereich eine Dickendetektionseinrichtung aufweisen, wie beispielweise einen Abstandssensor oder dergleichen, der die Dicke des plattenförmigen Werkstücks detektiert. Alternativ oder ergänzend kann eine solche Dickendetektionseinrichtung auch in einem anderen dem Bearbeitungswerkzeug vorgelagerten Bereich der Werkstückbearbeitungsvorrichtung vorgesehen sein.

Die bei der vorstehenden Beschreibung des Verfahrens beschriebenen Merkmale sind gleichermaßen auf die Werkstückbearbeitungsvorrichtung an sich bzw. jeweiligen Funktionen zuordenbare Komponenten davon anwendbar. Insbesondere ist eine jeweilige Steuerungsvorrichtung der Werkstückbearbeitungsvorrichtung dazu konfiguriert, die den jeweiligen Funktionen zuordenbaren Komponenten gemäß den entsprechenden Verfahrensmerkmalen anzusteuern. Folglich sind auch die den jeweiligen Funktionen zuordenbaren Komponenten dazu konfiguriert, die entsprechenden Verfahrensmerkmale auszuführen. Ebenso sind zur Werkstückbearbeitungsvorrichtung beschriebene Merkmale als Verfahrensmerkmale auf das Verfahren übertragbar, sofern sie nicht bereits hierzu schon beschrieben wurden.

In einem weiteren Aspekt betrifft die vorliegende Erfindung ein plattenförmiges Produkt, dessen Herstellung zumindest das vorstehend beschriebene Verfahren beinhaltet.

Durch die Anwendung des vorstehend beschriebenen Verfahrens auf das plattenförmige Produkt können nahtlose Übergänge zumindest teilweise beschichteter, insbesondere dekorativer Flächenabschnitte, die eine Produktoberseite und eine zumindest Produktkantenfläche ausbilden, geschaffen werden.

Die bei der vorstehenden Beschreibung des Verfahrens beschriebenen Merkmale zum Produkt sind gleichermaßen auf das Produkt an sich anwendbar. Ebenso sind zum Produkt beschriebene Verfahrensmerkmale auf das Verfahren übertragbar, sofern sie nicht bereits hierzu schon beschrieben wurden.

Nachfolgend werden exemplarische Ausführungsformen der vorliegenden Erfindung unter Zuhilfenahme der beigefügten Zeichnungen beschrieben.

### Im Einzelnen zeigt

Fig. 1A eine schematische Draufsicht auf ein Werkstück zur Herstellung eines Produkts gemäß einer exemplarischen Ausführungsform;
Fig. 1B eine schematische Seitenansicht des Werkstücks in Fig. 1A;
Fig. 2A eine schematische Seitenansicht des Werkstücks gemäß Fig. 1B mit einem gemäß Schritt S2 aufgebrachten Dekordruck und Strukturdruck;
Fig. 2B das bedruckte Werkstück gemäß Fig. 2A nach Einbringung von exemplarischen Nuten gemäß Schritt S4;
Fig. 2C ein aus dem Werkstück gemäß den Figuren 2A und 2B hergestelltes Produkt;
Fig. 3 eine schematische Darstellung einer exemplarischen Ausführungsform einer Werkstückbearbeitungsvorrichtung;
Fig. 4 eine schematische perspektivische Ansicht des Werkstücks gemäß Fig. 2B;
Fig. 5 eine schematische Draufsicht auf eine Werkstückunterseite eines Werkstücks mit vier abzuknickenden Werkstückkantenflächen;
Fig. 6 eine schematische Draufsicht auf die Werkstückunterseite des Werkstücks in Fig. 5 nach einem Abknicken der vier abzuknickenden Werkstückkantenflächen; und
Fig. 7 eine schematische Darstellung eines exemplarischen Verfahrensablaufs.

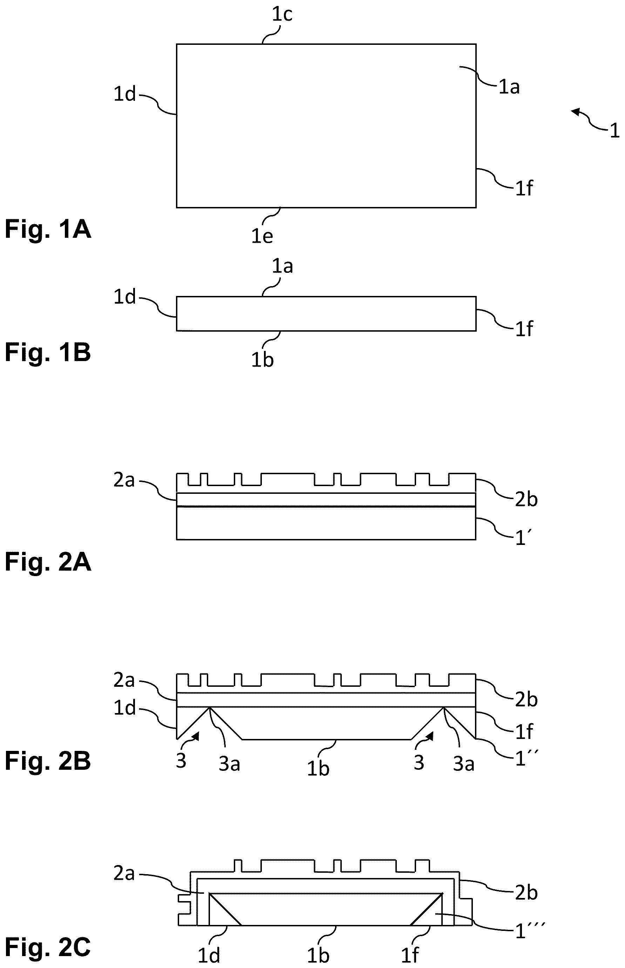

Fig. 1A zeigt eine schematische Draufsicht auf ein plattenförmigen Werkstück 1 zur Herstellung eines Produkts gemäß einer exemplarischen Ausführungsform. Das plattenförmigen Werksstück 1 ist in der exemplarischen Ausführungsform eine rechteckige Platte mit einer Werkstückoberseite 1a und vier Werkstückkantenflächen 1c, 1d, 1e und 1f.

Fig. 1B zeigt eine schematische Seitenansicht des plattenförmigen Werkstücks 1 in Fig. 1A. Fig. 1B zeigt in der schematischen Seitenansicht auch eine der Werkstückoberseite 1a gegenüberliegende Werkstückunterseite 1b. Die Werkstückoberseite 1a und die Werkstückunterseite 1b erstrecken sich parallel zueinander, so dass der Abstand zwischen der Werkstückoberseite 1a und der Werkstückunterseite 1b konstant ist und auch der Höhe der Werkstückkantenflächen 1c, 1d, 1e und 1 f entspricht, wobei in Fig. 1B lediglich die Werkstückkantenflächen 1a und 1f gezeigt sind. Die Werkstückkantenflächen 1c, 1d, 1e und 1 f verlaufen rechtwinkelig zur Werkstückoberseite 1a bzw. zur Werkstückunterseite 1b.

Fig. 2A zeigt eine schematische Seitenansicht des Werkstücks 1 gemäß Fig. 1B mit einem gemäß Schritt S2 aufgebrachten Dekordruck 2a und Strukturdruck 2b. In der vorliegenden exemplarischen Ausführungsform wird zunächst der Dekordruck 2a über ein digitales Bedrucken mittels einem digitalen Tintenstrahldruckverfahren auf die Werkstückoberseite 1a aufgebracht. Ebenso erfolgt auch das anschließende Aufbringen des Strukturdrucks 2b durch digitales Bedrucken des der Werkstückoberseite 1a abgewandten Seite des Dekordrucks 2a mit einer transparenten Drucktinte. Der Dekordruck 2a bildet hier eine Echtholzoberfläche nach, wobei der Strukturdruck 2b die Holzmaserungsstruktur und Holzartefakte, wie Astlöcher und/oder Poren, synchron zum Dekordruck 2a strukturell nachbildet. Der Dekordruck 2a und der Strukturdruck 2b bilden somit zusammen das Dekor für die dekorativen Flächenabschnitte als zumindest teilweise beschichtete Flächenabschnitte aus.

Fig. 2B zeigt das bedruckte Werkstück 1' gemäß Fig. 2A nach Einbringung von exemplarischen Nuten 3 gemäß Schritt S4. Allgemein betreffen die Bezugszeichen 1 und 1' oder auch im Folgenden 1'' und 1‴ kein unterschiedliches Werkstück, sondern unterschiedliche Werkstückzustände gemäß den erfolgen Verfahrensschritten.

Die in Fig. 2B gezeigten Nuten 3 werden in Schritt S4 als V-förmige in die Werkstückunterseite 1b eingebracht. Ein Nutgrund der jeweiligen Nuten 3 bildet eine jeweilige Knickkante 3a aus. In der exemplarischen Ausführungsform bilden die Nutflanken der Nuten 3 jeweils einen Winkel von 90° symmetrisch zu einer Senkrechten zur Werkstückoberseite 1a bzw. Werkstückunterseite 1b aus. Die Nuten 3 verlaufen parallel zu den Werkstückkantenflächen 1d und 1f, wobei die jeweils nach außenweisenden Nutflanken einen Winkel von 45° mit der ihnen jeweils zuordenbaren Werkstückkantenfläche 1d bzw. 1f bilden.

Fig. 2C zeigt ein aus dem Werkstück gemäß den Figuren 2A und 2B hergestelltes Produkt. In der exemplarischen Ausführungsform wird ein plattenförmiges Produkt gebildet, indem die von den Knickkanten 3a nach außen weisenden Flächenabschnitte des Werkstücks 1", die jeweils die Werkstückkantenfläche 1d bzw. 1f beinhalten, um 90° nach innen, also hier von der Werkstückoberseite 1a aus in Richtung der Werkstückunterseite 1b, in einem Schritt S6 abgeknickt bzw. gebogen werden. Entsprechend weist das nach Schritt S6 vorliegende Werkstück 1‴ eine plattenförmige Form auf, bei der die Werkstückkantenflächen 1d und 1f nun einen Teil bzw. eine Fortsetzung der Werkstückunterseite 1b ausbilden. Die vorherigen Flächenabschnitte der Werkstückoberseite 1a werden dabei zu Produktkantenflächen. Somit wird ein Produkt mit dekorativen Flächenabschnitten, die eine Produktoberseite und zumindest eine Produktkantenfläche bilden, einfacher und flexibler hergestellt.

Zur Fixierung der Nutflanken wird in einem Schritt S5 vor der Ausführung des Schritts S6 ein Haftmittel auf eine der Nutflanken einer jeweiligen Nut 3 aufgetragen. In alternativen Ausführungsformen kann die Fixierung alternativ oder ergänzend auch nach Schritt S6 durch Fixierungsmittel, wie Stiftnägel oder Schrauben, die jeweils von den abgeknickten Werkstückkantenflächen 1d und 1f aus eingebracht werden und die aufeinanderliegenden Nutflanken durchlaufen, erfolgen.

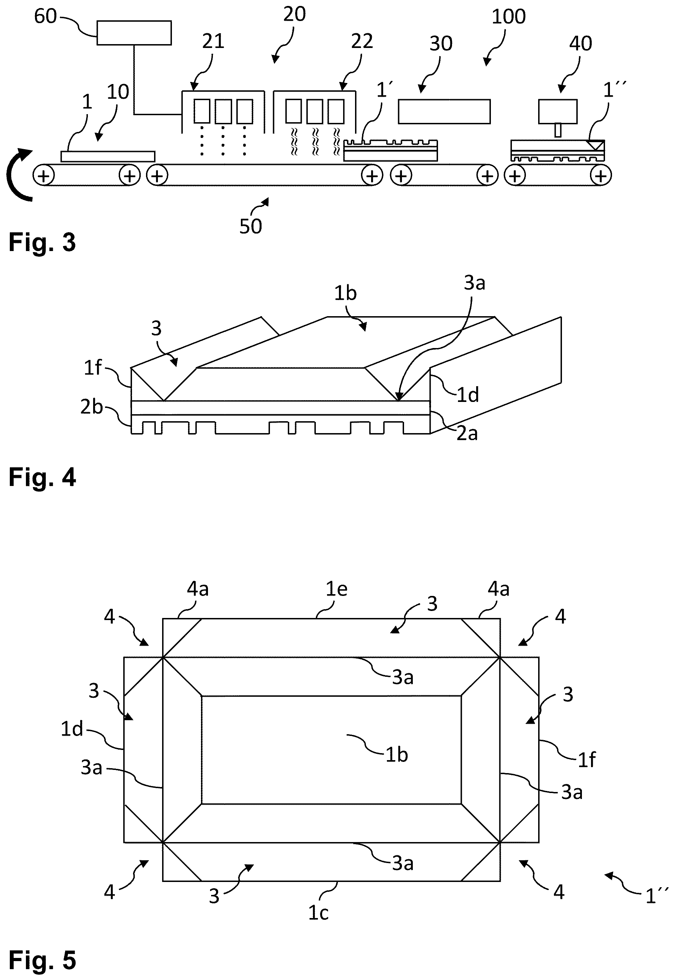

Fig. 3 zeigt eine schematische Darstellung einer exemplarischen Ausführungsform einer Werkstückbearbeitungsvorrichtung 100. Die Werkstückbearbeitungsvorrichtung 100 weist eine Werkstückzuführungseinheit 10, die hier aus einem Teil einer Transporteinrichtung 50 für das Werkstück 1 gebildet wird, eine Beschichtungseinheit 20, eine Werkstückwendeeinheit 30 und eine Bearbeitungseinheit 40 auf. Der in Fig. 3 dargestellte Pfeil repräsentiert eine Drehrichtung des Antriebs von Förderbändern als Transporteinrichtung 50 und somit eine daraus resultierende Werkstücktransportrichtung.

Das plattenförmige Werkstück 1 wird der Beschichtungseinheit 20 über die Werkstückzuführungseinheit 10 zugeführt. Die Beschichtungseinheit 20 weist eine Druckeinheit 21 und eine der Druckeinheit in der Werkstücktransportrichtung nachgelagerte Aushärtungseinheit 22 auf. Eine Steuerungsvorrichtung 20 steuert hier die Druckeinheit 21 für die digitale Bedruckung des Werkstücks 1. In der dargestellten Ausführungsform beinhaltet die Druckeinheit 21 mehrere Druckköpfe, um zuerst den Dekordruck 2a und anschließend den Strukturdruck 2b digital aufzudrucken. In anderen Ausführungsformen kann jeweils nur ein Dekordruck oder ein Strukturdruck aufgebracht werden. In der exemplarischen Ausführungsform ist die Druckeinheit 21 eine digitale Tintenstrahldruckeinheit, die im Single-Pass-Druck mit Druckköpfen über die gesamte Breite senkrecht zur Werkstücktransportrichtung in 6 Farben drucken kann. Nach der Aufbringung des Dekordrucks 2a und des Strukturdrucks 2b durchläuft das bedruckte Werkstück 1' die Aushärtungseinheit 22, um die digital gedruckte Tine mit UV-Strahlung auszuhärten. Das bedruckte Werkstück 1' wird der Werkstückwendeeinheit 30 zugeführt, um von dieser in einem Schritt S3 gewendet zu werden, so dass die vorher der Transporteinrichtung 50 zugewandte Werkstückunterseite 1b nach Durchlaufen der Werkstückwendeeinheit 30 der Transporteinrichtung 50 abgewandt ist, um der Bearbeitungseinheit 40 zugeführt zu werden. Die Bearbeitungseinheit 40 ist hier eine Frässtation, über die die Nuten 3 in die Werkstückunterseite 1b eingebracht werden. Das mit Nuten 3 versehene Werkstück 1'' kann anschließend einer nicht dargestellten Biegevorrichtung zum Abknicken der Flächenabschnitte gemäß Schritt S6 zur Ausbildung der dekorativen Flächenabschnitte des Produkts zugeführt werden. Die Bearbeitungseinheit 40 kann auch eine der Frässtation nachgelagerte Haftmittelaufbringungseinrichtung aufweisen, um gemäß einem Schritt S5 ein Haftmittel vor der Ausführung des Schrittes S6 auf die Nutflanken aufzubringen. Die Haftmittelaufbringungseinrichtung kann aber auch als separate Einheit zwischen der Bearbeitungseinheit 40 und der Biegevorrichtung angeordnet sein.

Fig. 4 zeigt eine schematische perspektivische Ansicht des bedruckten und mit Nuten 3 versehenen Werkstücks 1" gemäß Fig. 2B, wobei die Nuten 3 hier exemplarisch über die Frässtation als Bearbeitungseinheit 40 eingebracht wurden.

Fig. 5 zeigt eine schematische Draufsicht auf eine Werkstückunterseite 1b eines Werkstücks 1" mit vier abzuknickenden Werkstückkantenflächen 1c, 1d, 1e und 1f. Die Draufsicht betrifft das Werkstück 1'' nach Ausführung des Schrittes S4 und verdeutlicht parallel zu jeder Werkstückkantenflächen 1c, 1d, 1e, 1f durch Ausbildung jeweiliger Nuten 3 verlaufende Knickkanten 3a. Zudem sind zum Abknicken der die Werkstückkantenflächen 1c, 1d, 1e, 1f beinhaltenden Flächenabschnitte in den Angrenzungsbereich, also in den Ecken des plattenförmigen Werkstücks 1" Aussparungen 4 vorgesehen. Bei der exemplarischen Ausführungsform des plattenförmigen Werkstücks 1" handelt es sich um eine rechteckige Platte, so dass die Aussparungen für ein Abknicken um 90° freigeschnittene Ecken ausbilden. Mit anderen Worten entspricht dieser Freischnitt der jeweiligen Aussparung einem senkrechten Einschnitt senkrecht zu jeder Werkstückkantenfläche 1c, 1d, 1e, 1f entlang den Knickkanten 3a der jeweils angrenzenden Werkstückkantenflächen 1c, 1d, 1e, 1f bis zum jeweiligen Schnittpunkt der Knickkanten 3a der aneinandergrenzenden Flächenabschnitte. Zudem weisen die jeweiligen Aussparungen hier Kantenaussparungsabschnitte 4a auf, die durch die sich überschneidenden Nuten 3 ausgebildet werden. Somit weisen die an den Freischnitt angrenzenden Werkstückabschnitte einen von dem Freischnitt weg weisenden Abschnitt auf. Für ein Abknicken um 90° jeweils gebildete Kantenaussparungsabschnitt 4a wird somit durch einen Werkstückabschnitt gebildet, der von einer senkrechten Ansicht auf eine der Werkstückkantenflächen 1c, 1d, 1e, 1f einen Winkel von 45° mit der Werkstückoberseite 1a bildet. Zudem bildet dieser Werkstückabschnitt in Richtung der Knickkante 3a betrachtet einen Winkel von 45° mit der Werkstückoberseite 1a von der Werkstückoberseite 1a zur Werkstückunterseite 1b in Richtung der jeweiligen Werkstückkantenfläche 1c, 1d, 1e, 1f aus.

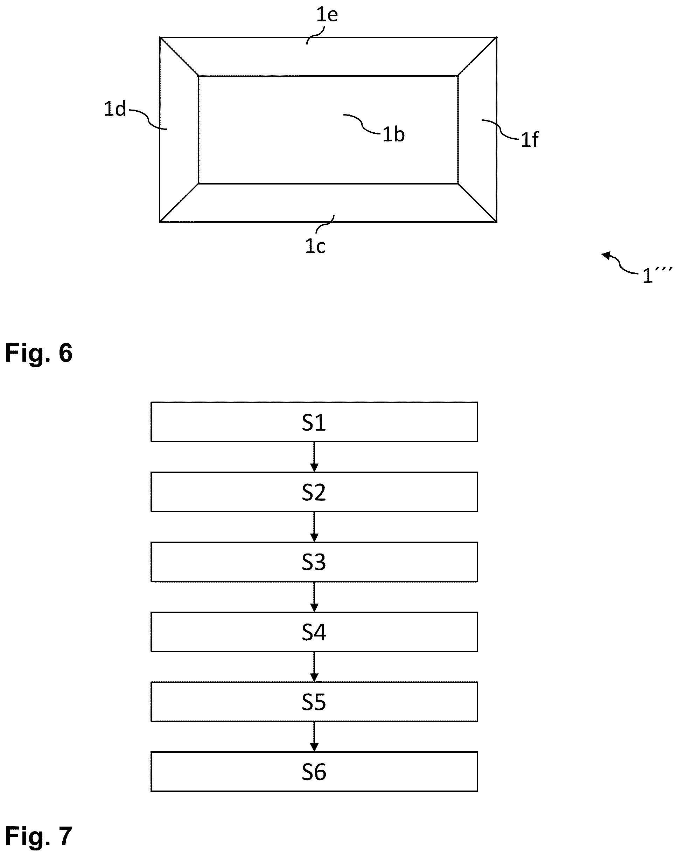

Fig. 6 zeigt eine schematische Draufsicht auf die Werkstückunterseite 1b des Werkstücks 1‴ in Fig. 5 nach einem Abknicken der vier abzuknickenden Werkstückkantenflächen 1c, 1d, 1e, 1f. In Anlehnung an Fig. 2C bilden nun die abgeknickten Werkstückkantenflächen 1c, 1d, 1e, 1f einen Teil der Werkstückunterseite 1b aus bzw. verlaufen mit der Werkstückunterseite 1b bündig in einer Ebene. Sofern fertigungsbedingte Toleranzen zu unerwünschten Überständen führen, kann der betroffene Bereich auch nochmals nachbearbeitet, beispielweise überfräst und/oder überschliffen werden.

Fig. 7 zeigt eine schematische Darstellung eines exemplarischen Verfahrensablaufs. In dem schon beschriebenen Schritt S1 wird das plattenförmige Werkstück 1 bereitgestellt, um in einem Schritt S2 auf der Werkstückoberseite 1a digital bedruckt zu werden. In Anlehnung an die in Fig. 3 gezeigte Werkstückbearbeitungsvorrichtung 100 wird das bedruckte Werkstück 1' in Schritt S3 gewendet und anschließend werden in Schritt S4 die Nuten 3 eingebracht. In Schritt S5 wird auf die Nutflanken ein Haftungsmittel aufgebracht, um die in Schritt S6 abgeknickten Flächenabschnitte durch Verkleben der Nutflanken als dekorative Flächenabschnitte des Produkts zu fixieren.

Nachfolgend werden zwei konkrete Ausführungsbeispiele zur Konkretisierung weiterer Aspekte des Erfindung angegeben.

### Ausführungsbeispiel 1:

Bei dem erfindungsgemäßen Verfahren wird gemäß des Ausführungsbeispiels 1 zunächst eine HDF-Platte (Hochdichte Faserplatte) mit einer Länge von 824 mm, einer Breite von 624 mm und einer Dicke von 12 mm als plattenförmiges Werkstück 1 der Beschichtungseinheit 20 automatisch zugeführt. In dieser Beschichtungseinheit 20 wird auf eine vorbehandelte Werkstückoberseite 1a der HDF-Platte als Dekordruck 2a ein digital gedrucktes Bild, welches eine Eichennachbildung darstellt, mit Hilfe eines 6-Farben Ink-Jet-Druckers als Druckeinheit 21 mit UV-härtenden Tinten aufgedruckt. Anschließend wird die so dekorativ beschichtete HDF-Platte als bedrucktes Werkstück 1' der Aushärtungseinheit 22 zugeführt, in welcher mit Hilfe von UV-Strahlung die UVhärtende Tinte ausgehärtet wird. Anschließend wird die HDF-Platte als bedrucktes Werkstück 1' einer Frässtation als Bearbeitungseinheit 40 zugeführt, bei welcher auf der nicht bedruckten Werkstückunterseite 1b der HDF-Platte als bedrucktes Werkstück 1' in mehreren Unterschritten mit Hilfe eines Fräsaggregates die Nuten 3 und Aussparungen derartig eingefräst werden, dass im Anschluss die Werkstückkantenflächen 1c bis f um 90° abgeklappt werden können. In einem weiteren Verfahrensschritt wird ein Hotmelt-Schmelzkleber mit Hilfe einer Hotmail-Düse auf die Nutflanken der eingebrachten Nuten 3 aufgebracht und die nach außen weisenden Flächenabschnitte der Werkstückoberseite 1a werden entlang der durch die Nuten 3 gebildeten Knickkanten 3a um 90° abgeknickt und die Platte so fertiggestellt. Im Ergebnis erhält man eine HDF-Platte mit den finalen Maßen 600 mm * 800 mm und einer abgeknickten Produktkantenflächenhöhe von 12 mm, wobei diese abgeknickte Produktkantenflächen identisch zu der Produktoberseitenfläche beschichtet ist. Der Begriff identisch bezeichnet hier einen nahtlosen Übergang in der Bildmerkmale des Dekordrucks von der Produktoberseitenfläche auf die Produktkantenflächen sowie die einheitliche Farbgebung zur Vermeidung von Metametrien.

### Ausführungsbeispiel 2:

Bei einer weiteren Ausführungsform des erfindungsgemäßen Verfahrens wird zunächst eine Spanplatte mit einer Dicke von 24 mm und einer Länge von 5000 mm sowie einer Breite von 650 mm als plattenförmiges Werkstück 1 der Beschichtungseinheit 20 automatisch zugeführt. In dieser Beschichtungseinheit 20 wird auf die Werkstückoberseite 1a des Werkstückes 1 eine digitale Beschichtung aus mehreren übereinander liegenden Schichten aufgebracht, welche der entsprechenden DIN Norm für die Küchenindustrie als Küchenarbeitsplattenoberfläche entspricht. Diese Beschichtung besteht üblicherweise aus einer weißen Grundierung, gefolgt von einer dekorativen digitalen Bedruckung mit UV Tinten. Anschließend werden mehrere Schichten bevorzugt weniger als 10 Schichten, besonders bevorzugt weniger als 5 Schichten von mit verschiedenen Additiven versehenen Acrylatlacken aufgebracht..In einer besonders bevorzugten Ausführungsform können diese Acrylatlacke durch Zugabe von Photoinitiatoren UV-härtend ausgebildet sein. In einer anschließenden Bearbeitung wird auf die letzte Schicht eine dreidimensionale Struktur mit einer maximalen Schichtstärkenhöhe von weniger als 300 µm, besonders bevorzugt weniger als 200 µmaufgebracht. Im Anschluss wird eine ganzflächige mattierende UV-Acrylat-Beschichtung aufgeführt mit einer Schichtstärke von weniger als 100 µm, bevorzugt weniger als 50 µm, besonders bevorzugt weniger als 20 µm. Damit wird der Glanzgrad der Oberfläche auf bevorzugt weniger als 10 Glanzpunkte gemessen mit dem Gloss Meter eingestellt. Anschließend wird die so vorbereitete Spanplatte einer Fräseinheit zugeführt bei der von unten, also von der Werkstückunterseite 1b, an eine Längskante eine entsprechende Nut eingefräst wird. Durch diese Nut entsteht eine Knickkante entlang der Längskante auf der Werkstückoberseite 1a mit einem Abstand zur Kante von 24 mm. Nach dem Abknicken um 90 Grad dieser vorderen bedruckten Fläche entlang der Knickkante ergibt sich so ein fertiges Produkt als Küchenarbeitsplatte mit einer Breite von 650 mm und zwei dekorativ bedruckten Flächenabschnitten. In einer weiteren Ausführungsform kann auf der der Längskante gegenüberliegenden Seite ebenfalls eine Knickkante durch eine Nut eingefräst werden, so dass anschließend nach dem Abknicken und verkleben drei dekorative Oberflächen entstehen.

Die Erfindung ist nicht auf die beschriebenen Ausführungsformen beschränkt. Insbesondere sind zu den Ausführungsformen, anderweitig beschriebenen Ausgestaltungen und Weiterbildungen der Erfindung beschriebene Merkmale untereinander kombinierbar, sofern sie sich nicht vernünftigerweise ausschließen. Auch wenn die beschriebenen Ausführungsformen jeweils gegenüberliegende Nuten zeigen, können auch Nuten für aneinandergrenzende Werkstückkantenflächen vorgesehen werden, wobei hierbei eine Aussparung im Angrenzungsbereich der Werkstückkantenflächen vorzusehen ist, um die Werkstückkantenflächen ungehindert abknicken zu können. So können beispielsweise Produktkantenflächen bzw. Produktseitenflächen mit dekorativen Flächenabschnitten rund um eine Produktoberseite oder nur über einen Teil der Produktoberseite verlaufen. Auch muss die Nut nicht über die gesamte Länge der Werkstückkantenfläche verlaufen und kann nur über Einschnitte nur einen abzuknickenden Teilabschnitt darstellen. Die in den Ausführungsformen angegebenen Verfahrensschritte können zudem weitere Zwischenschritte beinhalten. So kann der Schritt S2 neben dem digitalen Bedrucken der Werkstückoberseite auch einer Zwischenlackierung, einer Trocknung, einer weiteren Bedruckung, einer nochmaligen Trocknung und/oder anderen Verfahren zur Ausbildung des bedruckten Werkstücks unterzogen werden. Auch ist das Beschichten der Werkstückoberseite nicht auf ein digitales Bedrucken beschränkt, sondern es können auch andere Druckverfahren und Beschichtungsverfahren, wie beispielsweise ein Aufkaschieren einer Papierfolie oder ein Beschichten mit einer bedruckten Folie aus Kunststoff.

### Liste der Bezugszeichen

- 1, 1', 1", 1‴: Werkstück
- 1a: Werkstückoberseite
- 1b: Werkstückunterseite
- 1c, 1d, 1e, 1f: Werkstückkantenfläche
- 2a: Dekorschicht
- 2b: Strukturschicht
- 3: Nut
- 3a: Knickkante
- 4: Aussparung
- 4a: Kantenaussparungsabschnitt
- 10: Werkstückzuführungseinheit
- 20: Beschichtungseinheit
- 21: Druckeinheit
- 22: Aushärtungseinheit
- 30: Werkstückwendeeinheit
- 40: Bearbeitungseinheit
- 50: Transporteinrichtung
- 60: Steuerungsvorrichtung
- 100: Werkstückbearbeitungsvorrichtung

## Patentansprüche

1. Verfahren zur Herstellung eines plattenförmigen Produkts mit zumindest zwei zumindest teilweise beschichteten Flächenabschnitten, umfassend die Schritte:
Schritt S1: Bereitstellen eines plattenförmigen Werkstücks (1, 1', 1", 1‴) mit einer Werkstückoberseite (1a) und einer der Werkstückoberseite gegenüberliegenden Werkstückunterseite (1b), wobei sich zumindest eine Werkstückkantenfläche (1c, 1d, 1e, 1f) zwischen der Werkstückoberseite (1a) und der Werkstückunterseite (1b) erstreckt und der Dicke des plattenförmigen Werkstücks (1, 1', 1", 1‴) an der durch die zumindest eine Werkstückkantenfläche (1c, 1d, 1e, 1f) gebildeten Außenkante entspricht,
Schritt S2: Zumindest teilweises Beschichten der Werkstückoberseite (1a) in Bereichen von Flächenabschnitten, die die zumindest zwei zumindest teilweise beschichteten Flächenabschnitte ausbilden, wobei einer der zumindest teilweise zu beschichtenden Flächenabschnitte der Werkstückoberseite (1a) an die zumindest eine Werkstückkantenfläche (1c, 1d, 1e, 1f) angrenzt, und
Schritt S4: Einbringen oder Bereitstellen zumindest einer Nut (3) in die bzw. der Werkstückunterseite (1b) zur Ausbildung zumindest einer Knickkante (3a) auf der Werkstückoberseite (1a), um die der Flächenabschnitt der Werkstückoberseite (1a) als ein zumindest teilweise beschichteter Flächenabschnitt gegenüber dem an die Knickkante (3a) angrenzenden anderen Flächenabschnitt der Werkstückoberseite (1a) als weiterer zumindest teilweise beschichteter Flächenabschnitt abknickbar ist,
wobei die Nut (3) in Schritt S4 derart in das plattenförmige Werkstück (1, 1', 1", 1‴) eingebracht bzw. bereitgestellt wird, dass die zumindest eine Werkstückkantenfläche (1c, 1d, 1e, 1f) nach einem Abknicken des zumindest einen teilweise beschichteten Flächenabschnitts der Werkstückoberseite (1a), der an die zumindest eine Werkstückkantenfläche (1c, 1d, 1e, 1f) angrenzt, in einer Ebene mit der Werkstückunterseite (1b) liegt.

2. Das Verfahren nach Anspruch 1, wobei das zumindest teilweise Beschichten zumindest ein teilweises Beschichten mit einem Dekor, einer Farbe und/oder einer Funktionsbeschichtung umfasst.

3. Das Verfahren nach Anspruch 1 oder 2, wobei das zumindest teilweise Beschichten gemäß Schritt S2 vor oder nach dem Einbringen der zumindest einen Nut (3) in die Werkstückunterseite (1b) gemäß Schritt S4 erfolgt und das Werkstück (1, 1', 1", 1‴) zwischen der Ausführung der Schritte S2 und S4 in einem Schritt S3 gewendet wird, so dass Schritt S2 und Schritt S4 von der gleichen Seite aus ausgeführt werden.

4. Das Verfahren nach einem der vorhergehenden Ansprüche, wobei die Nut (3) in Schritt S4 spanend in die Werkstückunterseite (1b) eingebracht wird, insbesondere gefräst wird.

5. Das Verfahren nach einem der vorhergehenden Ansprüche, wobei nach den Schritten S2 und S4 in einem Schritt S6 zumindest einer der an der Knickkante (3a) angrenzenden zumindest teilweise beschichteten Flächenabschnitte entlang der Knickkante (3a) abgeknickt wird, um das plattenförmige Produkt auszubilden, wobei insbesondere der in Schritt S6 abzuknickende zumindest teilweise beschichtete Flächenabschnitt um 30° bis 150°, bevorzugt um 60° bis 120°, besonders bevorzugt um 90° aus der Ebene der Werkstückoberseite (1a) oder der Werkstückunterseite (1b) abgeknickt wird.

6. Das Verfahren nach Anspruch 5, wobei nach den Schritten S2 und S4 und vor Schritt 6 in einem Schritt S5 zumindest abschnittsweise ein Haftmittel auf den Nutflanken aufgebracht wird, um die zumindest teilweise beschichteten Flächenabschnitte nach Ausführung des Schritts S6 in der abgeknickten Position zu fixieren.

7. Das Verfahren nach einem der vorherigen Ansprüche, wobei das zumindest teilweise Beschichten der Werkstückoberseite (1a) in Schritt S2 ein zumindest teilweises digitales Bedrucken umfasst.

8. Das Verfahren nach Anspruch 7, wobei durch das zumindest teilweise digitale Bedrucken in Schritt S2 ein Dekordruck (2a) und/oder ein Strukturdruck (2b) erzeugt wird, wobei insbesondere durch das zumindest teilweise digitale Bedrucken in Schritt S2 der Dekordruck (2a) und der Strukturdruck (2b) synchron erzeugt werden.

9. Das Verfahren nach Anspruch 7 oder 8, wobei in Schritt S2 auf einen Flächenabschnitt, der den einen der zumindest zwei zumindest teilweise digital bedruckten Flächenabschnitte bildet, ein anderes Dekor gedruckt wird als auf einen anderen Flächenabschnitt, der den anderen der zumindest zwei zumindest teilweise digital bedruckten Flächenabschnitte bildet.

10. Das Verfahren nach einem der vorhergehenden Ansprüche, wobei das Werkstück zumindest zwei aneinandergrenzende Werkstückkantenflächen (1c, 1d, 1e, 1f) aufweist und wobei in Schritt S4 für jede der zumindest zwei aneinandergrenzenden Werkstückkantenflächen (1c, 1d, 1e, 1f) die zumindest eine Nut (3) sowie eine Aussparung im Angrenzungsbereich der zumindest zwei aneinandergrenzenden Werkstückkantenflächen (1c, 1d, 1e, 1f), die ein Abknicken der zumindest zwei aneinandergrenzenden Werkstückkantenflächen (1c, 1d, 1e, 1f) ermöglicht, eingebracht oder bereitgestellt wird.

11. Das Verfahren nach Anspruch 10, wobei das plattenförmige Werkstück (1, 1', 1", 1‴) als Viereck mit vier aneinandergrenzenden Werkstückkantenflächen (1c, 1d, 1e, 1f) ausgebildet ist und für jede der vier aneinandergrenzenden Werkstückkantenflächen (1c, 1d, 1e, 1f) die zumindest eine Nut (3) sowie eine Aussparung (4) in den Angrenzungsbereichen der jeweils aneinandergrenzenden Werkstückkantenflächen (1c, 1d, 1e, 1f), die ein Abknicken der jeweils aneinandergrenzenden Werkstückkantenflächen (1c, 1d, 1e, 1f) ermöglicht, eingebracht oder bereitgestellt wird.

12. Werkstückbearbeitungsvorrichtung (100) mit zumindest einer Beschichtungseinheit (20) und mit einer Steuerungsvorrichtung (60), die dazu konfiguriert ist, die Beschichtungseinheit (20) zumindest zur Ausführung des Schritts S2 des Verfahrens nach einem der Ansprüche 1 bis 11 anzusteuern.

13. Die Werkstückbearbeitungsvorrichtung (100) nach Anspruch 12, wobei die Steuerungsvorrichtung (60) dazu konfiguriert ist, das zumindest teilweise digitale Bedrucken der die zumindest zwei zumindest teilweise beschichteten Flächenabschnitte bildenden Flächenabschnitte gemäß den Ansprüchen 7 bis 9 in ihrem jeweiligen Dekor und/oder ihrer jeweiligen Flächen anzupassen.

14. Die Werkstückbearbeitungsvorrichtung (100) nach Anspruch 12 oder 13, wobei die Werkstückbearbeitungsvorrichtung (100) zudem eine der Beschichtungseinheit (20) vorgelagerte oder nachgelagerte Bearbeitungseinheit (40) aufweist, wobei die Steuerungsvorrichtung (60) oder eine weitere Steuerungsvorrichtung dazu konfiguriert ist, die Bearbeitungseinheit (40) zur Ausführung des Schritts S4 anzusteuern.

15. Plattenförmiges Produkt, dessen Herstellung zumindest das Verfahren nach einem der Ansprüche 1 bis 11 beinhaltet.
